(19) Europäisches Patentamt / European Patent Office / Office européen des brevets

(11) **EP 2 735 665 A1**

(12) **DEMANDE DE BREVET EUROPEEN**

(43) Date de publication:
**28.05.2014  Bulletin 2014/22**

(51) Int Cl.:
**E04D 11/00** (2006.01)     **E04D 13/04** (2006.01)
**A01G 1/00** (2006.01)      **A01G 27/02** (2006.01)

(21) Numéro de dépôt: **13194280.7**

(22) Date de dépôt: **25.11.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité:  **23.11.2012  FR 1261193**

(71) Demandeur: **Sarl Le Prieure**
**41160 Moisy (FR)**

(72) Inventeur: **Lame, Raphael**
**41160 Moisy (FR)**

(74) Mandataire: **Regimbeau**
**20, rue de Chazelles**
**75847 Paris Cedex 17 (FR)**

(54)    **Dispositif d'evacuation d'eau d'un bac de retention**

(57)    Dispositif d'évacuation d'eau d'un espace intérieur d'un réservoir de rétention temporaire d'eau par un premier passage d'évacuation (2), caractérisé en ce qu'il comprend :
- une conduite (1) agencée pour assurer une communication fluidique entre l'espace intérieur et le premier passage d'évacuation (2), la conduite (1) présentant une section intérieure (12) dont la surface va en croissant dans le sens d'écoulement de l'eau dans la conduite vers le premier passage d'évacuation (2) et
- un obturateur (3) disposé à l'intérieur de la conduite (1), et contrôlé de manière à être déplacé à l'intérieur de la conduite (1) en fonction du niveau d'eau dans l'espace intérieur, le déplacement de l'obturateur (3) dans la conduite (1) permettant de réguler le débit de fuite à travers le premier passage d'évacuation (2) quel que soit le niveau d'eau dans l'espace intérieur entre un premier niveau et un deuxième niveau d'eau.

FIG 1a

## Description

Le domaine de l'invention est celui de la gestion des eaux pluviales. L'invention concerne plus précisément un dispositif d'évacuation d'eau d'un espace intérieur d'un bac de rétention temporaire d'eau. L'invention concerne en outre un bac de rétention temporaire d'eau présentant un tel dispositif.

### Etat de l'art

Compte tenu de l'imperméabilisation croissante des sols urbains et des toitures, la gestion des eaux pluviales est devenue une préoccupation majeure.

En effet, les eaux pluviales ne peuvent pas s'infiltrer dans les sols imperméabilisés ou sur les toitures modernes. Une grande partie des eaux pluviales doit être collectée et traitée. Cette collecte présente un coût financier (canalisations, bassins de rétention, usines de traitement des eaux), et écologique car les eaux sont souillées par de nombreux polluants sur leur parcours (déchets, hydrocarbures, métaux lourds...).

Un autre problème résultant de l'imperméabilisation des sols est le risque accru d'inondations. Lors de violents orages, des volumes d'eaux pluviales de plus en plus importants ruissellent, engendrant un engorgement des canalisations et des débordements.

Les toitures végétalisées apportent des réponses concrètes à ces problèmes dans la mesure où elles offrent une réelle gestion des eaux pluviales. Les toitures végétalisées permettent en premier lieu une gestion de l'infiltration. Les toitures végétalisées permettent également une gestion de la rétention des eaux pluviales en jouant un rôle tampon (effet retard) lors de violents orages. Les toitures végétalisées permettent ainsi de réduire le coefficient de ruissellement (les essais montrent que ce coefficient est de 0,4 à 0,6 pour une toiture végétalisée au lieu de 1 pour un revêtement imperméable).

Les systèmes actuels de toitures végétalisées présentent cependant certaines limitations. Si les toitures végétalisées permettent de réduire significativement et temporairement le ruissellement, le coefficient pourrait être réduit davantage, le débit de fuite est en revanche difficilement contrôlable. En outre, si les toitures végétalisées réduisent le coefficient de ruissellement moyen annuel d'environ 50%, elles n'assurent pas un abattement systématique de chaque évènement pluvieux. En effet, le coefficient de ruissellement n'est pas réellement maîtrisé mais varie sensiblement en fonction des caractéristiques de l'évènement pluvieux et de l'état hydrique de la toiture végétalisée. Ainsi, une toiture végétalisée déjà saturée par de précédentes pluies aura un coefficient de ruissellement quasiment égal à 1 et un effet retard nul, ce qui se traduit par un débit de fuite non réduit et dans tous les cas jamais constant.

Des toitures stockantes non nécessairement végétalisées ont été développées pour réduire très fortement et maîtriser le coefficient de ruissellement. Ces toitures stockantes assurent une rétention temporaire des eaux pluviales pour les évacuer selon un certain débit de fuite étalé dans le temps. Cependant les débits de fuite correspondants ne sont pas constants en fonction du niveau de hauteur d'eau stockée et ces toitures stockantes ne permettent pas non plus un abattement systématique de chaque évènement pluvieux si ceux-ci sont rapprochés.

Les documents EP 1044599 B1 et WO 2010/086369 A1 présentent des éléments permettant de répondre aux exigences de végétalisation et contrôle des eaux pluviales des toitures et particulièrement des toitures en pente. Cependant les éléments décrits ne sont pas nécessairement aisés à installer dans des bacs déjà existants. Par ailleurs une meilleure régulation du débit d'eau serait souhaitable. De plus, la gestion de la régulation et d'un possible trop-plein implique des pièces complexes à réaliser et à mettre en oeuvre.

### Résumé de l'invention

L'invention a pour objectif de surmonter au moins l'un de ces problèmes. Un objectif est en particulier d'améliorer la rétention temporaire des eaux pluviales sur des toitures en améliorant la maîtrise du débit de fuite.

A cet effet, l'invention propose, selon un premier aspect, un dispositif d'évacuation d'eau d'un espace intérieur d'un réservoir de rétention temporaire d'eau par un premier passage d'évacuation, caractérisé en ce qu'il comprend :

- une conduite agencée pour assurer une communication fluidique entre l'espace intérieur et le premier passage d'évacuation, la conduite présentant une section intérieure dont la surface va en croissant dans le sens d'écoulement de l'eau dans la conduite vers le premier passage d'évacuation et
- un obturateur disposé à l'intérieur de la conduite, et contrôlé de manière à être déplacé à l'intérieur de la conduite en fonction du niveau d'eau dans l'espace intérieur, le déplacement de l'obturateur dans la conduite permettant de réguler le débit de fuite à travers le premier passage d'évacuation quel que soit le niveau d'eau dans l'espace intérieur entre un premier niveau et un deuxième niveau d'eau.

L'invention est avantageusement complétée par les caractéristiques suivantes, prises seules ou en une quelconque de leurs combinaisons techniquement possibles :

- la section intérieure de la conduite est de forme conique,
- l'obturateur est relié à un flotteur, la hauteur du flotteur étant déterminée par le niveau d'eau dans l'espace intérieur et contrôlant la position de l'obturateur,
- l'obturateur est relié au flotteur par un lien filaire traversant la conduite,
- un guide le long duquel le flotteur se déplace,
- l'obturateur présente une forme complémentaire d'une extrémité ouverte de la conduite à l'opposé du premier passage d'évacuation, de sorte à bloquer l'écoulement de l'eau à travers ladite extrémité lorsque le niveau d'eau dans l'espace intérieur dépasse le premier niveau,
- la conduite présente un deuxième passage d'évacuation de trop-plein apte à assurer une communication fluidique entre l'espace intérieur et la conduite, débouchant en aval de ladite extrémité de la conduite de telle sorte que l'eau présente dans l'espace intérieur peut s'écouler par le deuxième passage vers le premier passage lorsque l'obturateur bloque l'écoulement de l'eau à travers ladite extrémité,
- le débit de fuite régulé est un débit constant quel que soit le niveau d'eau dans l'espace intérieur entre le premier niveau et le deuxième niveau d'eau,
- la conduite et l'obturateur sont logés dans un boîtier délimitant un espace intermédiaire et présentant un troisième passage reliant l'espace intérieur et l'espace intermédiaire,
- le troisième passage est muni d'un filtre.

Selon un autre aspect, l'invention concerne un réservoir de rétention temporaire d'eau comprenant un tel dispositif d'évacuation d'eau.

Selon encore un autre aspect, l'invention concerne un système de rétention d'eau, comprenant un bac de végétalisation et un bac de rétention temporaire d'eau, le bac de végétalisation étant :

- conformé pour venir s'encastrer dans un bac de rétention temporaire d'eau, ou
- venu de matière avec un bac de rétention temporaire d'eau,

le bac de rétention temporaire d'eau comprenant un tel dispositif d'évacuation d'eau.

**Brève description des figures**

D'autres caractéristiques et avantages de l'invention apparaitront mieux à la lecture de la description détaillée suivante de formes de réalisation préférées de celle-ci, donnée à titre d'exemple non limitatif, et faite en référence aux dessins annexés sur lesquels :

- la figure 1a représente une vue en coupe d'un dispositif d'évacuation d'eau selon un exemple de mode de réalisation de l'invention dans une première position,
- la figure 1b représente une vue en coupe du dispositif de la figure 1a dans une deuxième position,
- la figure 2 représente un obturateur d'un dispositif selon un autre exemple de mode de réalisation de l'invention,
- la figure 3 représente un dispositif selon un autre exemple de mode de réalisation de l'invention,
- la figure 4 représente un bac de rétention d'eau comprenant un dispositif d'évacuation d'eau selon encore un autre exemple de mode de réalisation de l'invention,
- la figure 5 représente une vue en coupe d'une partie d'une structure de bacs comprenant un dispositif d'évacuation d'eau selon encore un autre exemple de mode de réalisation de l'invention.

**Description détaillée de l'invention**

1. Dispositif d'évacuation d'eau

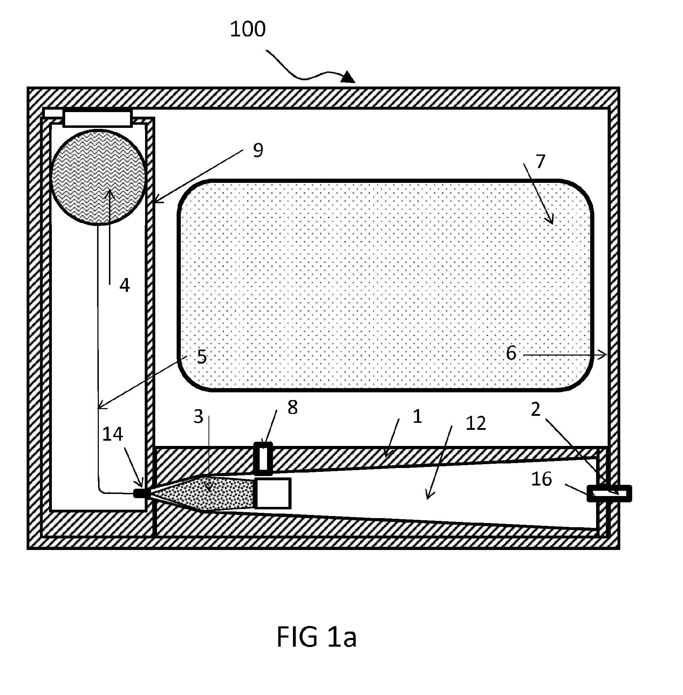

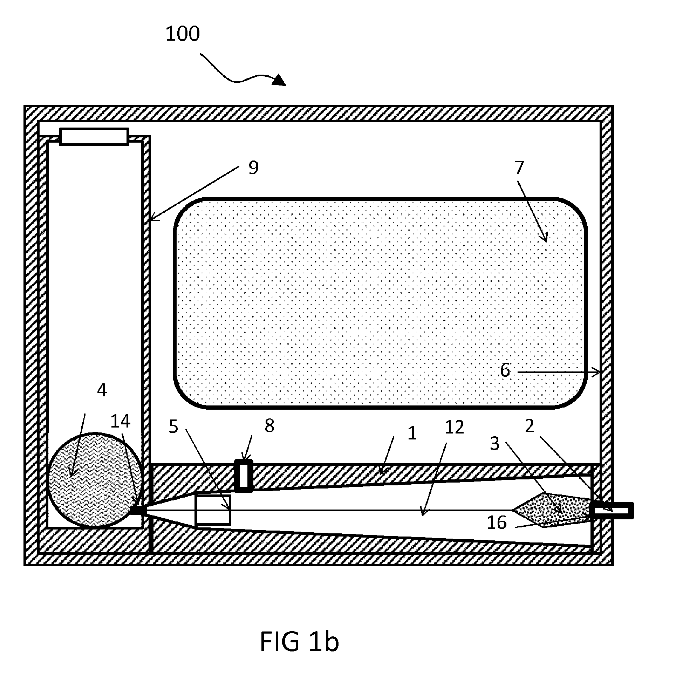

En référence aux figures 1a et 1b, il est décrit un dispositif d'évacuation d'eau d'un espace intérieur d'un réservoir de rétention temporaire d'eau, par exemple un bac de rétention temporaire d'eau, par un premier passage d'évacuation 2.

*1.1. Conduite*

Le dispositif comprend une conduite 1 agencée pour assurer une communication fluidique entre l'espace intérieur et le premier passage d'évacuation 2. Ainsi l'eau provenant de l'espace intérieur, auquel est relié le dispositif, peut s'écouler par la conduite 1 afin d'atteindre le premier passage d'évacuation 2.

La conduite 1 présente une section intérieure 12 dont la surface va en croissant dans le sens d'écoulement de l'eau dans la conduite 1 vers le premier passage d'évacuation 2. L'eau dans la conduite 1 provient de l'espace intérieur. La section intérieure 12 de la conduite 1 peut être de forme conique. La conduite 1 peut être un tube de section intérieure circulaire, carrée ou triangulaire et de section extérieure rectangulaire ou cylindrique.

La conduite 1 présente une extrémité d'entrée 14 ouverte et une extrémité de sortie 16 ouverte. L'extrémité d'entrée 14 est disposée à l'opposé du premier passage d'évacuation 2. L'extrémité d'entrée 14 est disposée en amont de l'extrémité de sortie 16 dans le sens d'écoulement de l'eau. Les extrémités d'entrée 14 et de sortie 16 sont disposées de part et d'autre de la section intérieure 12. L'extrémité d'entrée 14 peut présenter un orifice d'entrée d'eau de la même taille que la partie de la section intérieure 12 adjacente. L'extrémité de sortie 16 peut présenter un orifice de sortie d'eau de taille inférieure à la partie de la section intérieure 12 adjacente.

La conduite 1 peut être disposée de manière sensiblement horizontale, de telle sorte que l'écoulement entre l'extrémité d'entrée 14 et l'extrémité de sortie 16 est sensiblement horizontal lorsque le dispositif est placé dans un bac même lorsque celui-ci est posé sur un toit incliné comme décrit dans le brevet WO2010/086369 A1.

La conduite 1 peut être réalisée en tout matériau inerte, par exemple en un matériau métallique inerte ou en matière plastique.

*1.2. Obturateur*

Le dispositif comprend un obturateur 3 disposé à l'intérieur de la conduite 1. L'obturateur 3 est contrôlé de manière à être déplacé à l'intérieur de la conduite 1 en fonction du niveau d'eau dans l'espace intérieur. L'obturateur 3 peut se déplacer le long de la section intérieure 12 en fonction du niveau d'eau dans l'espace intérieur.

Le déplacement de l'obturateur 3 dans la conduite 1 permet de réguler le débit de fuite à travers le premier passage d'évacuation 2 quel que soit le niveau d'eau dans l'espace intérieur entre un premier niveau et un deuxième niveau d'eau. En effet, le contrôle de l'obturateur 3 permet d'ajuster la configuration du chemin d'écoulement de l'eau en fonction du niveau d'eau. En particulier, il est ainsi possible d'obtenir un débit de fuite constant à travers le premier passage d'évacuation 2 quelque que soit le niveau d'eau, et donc le volume d'eau stocké, dans l'espace intérieur entre un premier niveau et un deuxième niveau d'eau. Le premier niveau correspond à la position haute du flotteur 4 (volume d'eau maximum faisant l'objet d'une régulation par le dispositif) décrite dans la figure 1a. Le deuxième niveau d'eau correspond à la position basse du flotteur 4 (niveau d'eau minimum faisant l'objet d'une régulation par le dispositif). Par débit constant, on entend un débit stable à 5% près sur la plage de hauteur d'eau considérée. La figure 1a représente le dispositif lorsque le niveau d'eau correspond au premier niveau d'eau. La figure 1b représente le dispositif lorsque le niveau d'eau correspond au deuxième niveau d'eau.

Le débit de fuite peut être réglé en fonction des variations apportées aux dimensions du dispositif. Selon le volume d'eau stocké, le débit de fuite régulé par le système est fonction de la longueur de la conduite 1 et sa section interne, ainsi que de la position de l'obturateur. Le dispositif offre de surcroit plus de flexibilité par rapport à l'art antérieur en permettant de choisir et modifier le débit de fuite souhaité en fonction de la longueur et de la section de la conduite 2. En termes de dimensionnement du dispositif par rapport au volume d'eau prévu et/ou de hauteur du niveau d'eau prévue, plus le volume d'eau prévu d'être stocké est important, ou plus la hauteur du niveau d'eau est importante, plus la conduite 1 est longue, et inversement. En termes de dimensionnement du dispositif par rapport à la régulation du débit de fuite prévu, plus le débit de fuite prévu est faible, plus la section interne de la section intérieure 12 est petite, et inversement.

Le débit de fuite est de manière générale inférieur à 5L/s/ha, de manière préférentielle inférieur à 2L/s/ha. Le débit de fuite est adapté au bâtiment et à sa localisation, de manière à répondre aux directives locales relatives à la gestion de l'eau. Le dispositif permet d'assurer des valeurs de débit de fuite aussi basses que 1 L/s/ha ou toute valeur supérieure.

On relèvera que si dispositif consistait en un simple orifice, le débit de fuite ne serait pas constant. Le débit diminue effectivement au fur et à mesure que la hauteur d'eau diminue dans le bac selon la formule mathématique suivante :

$$Q = \Omega \; x \; \textit{Surface exutoire} \; x \; (2 \; x \; g \; x \; h)^{0,5}$$

où Q désigne le débit de fuite, Ω est un coefficient lié à la géométrie de l'orifice, g désigne l'accélération de la pesanteur et h représente la hauteur d'eau. A titre d'exemple, entre des hauteurs d'eau de 100 mm et 10 mm, le débit pourrait être divisé par trois.

L'obturateur 3 présente une forme complémentaire de l'extrémité d'entrée 14 ouverte de l'intérieur de la conduite 1, à l'opposé du premier passage d'évacuation (2), de sorte soit à bloquer l'écoulement de l'eau à travers l'extrémité d'entrée 14 lorsque le niveau d'eau dans l'espace intérieur dépasse le premier niveau soit à ne pas l'obturer totalement et à laisser passer un filet d'eau assurant ainsi une fonction de trop-plein. L'obturateur 3 peut présenter une forme conique. En variante, l'obturateur 3 peut présenter une forme en goutte d'eau, une forme sphérique ou une forme cylindrique.

L'obturateur 3 peut être constitué de cette forme complémentaire, ou cette forme peut n'être qu'une partie de l'obturateur 3. Ainsi tel qu'illustré aux figures 1a et 1b, l'obturateur 3 peut présenter une forme conique complémentaire de l'extrémité d'entrée 14, la forme conique étant en prise avec une forme cylindrique s'étendant à partir de la base de la forme conique, la forme cylindrique assurant une meilleure stabilité de l'obturateur 3 lorsque celui-ci est soumis à un flux d'eau s'écoulant à travers la conduite 1.

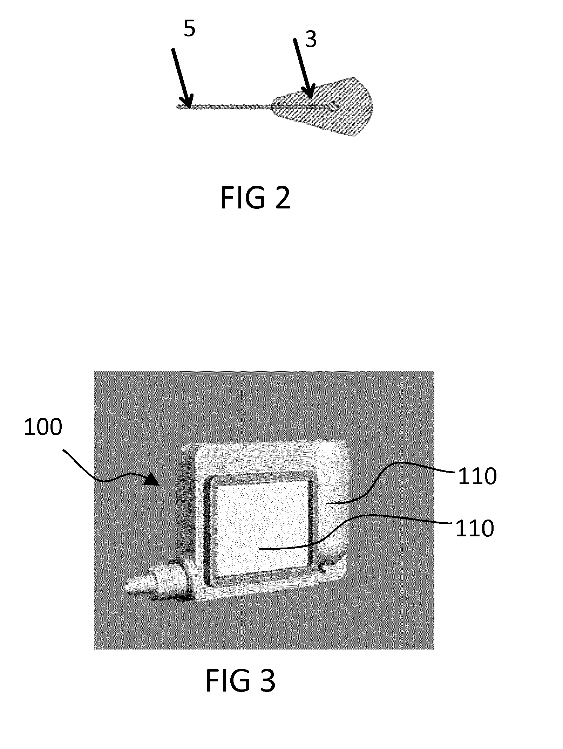

En référence à la figure 2, une variante d'obturateur 3 est décrite. L'obturateur 3 représenté présente une forme conique en prise au niveau de la base de la forme conique avec une forme arrondie, l'obturateur 3 présentant ainsi une forme générale de goutte d'eau

L'obturateur 3 peut ainsi former une navette flottante. L'obturateur 3 peut être prisonnier de l'intérieur de la conduite 1.

L'obturateur 3 peut être réalisé en un matériau inerte, par exemple en matière plastique.

Le dispositif peut être associé à tout système de gestion des eaux, par exemple de gestion des eaux pluviales ou des eaux d'irrigation, toitures végétalisées, toitures stockantes, réservoir temporaire afin de permettre un débit de fuite des eaux ainsi stockées maitrisé et constant.

### 1.3. Flotteur

L'obturateur 3 peut être relié à un flotteur 4, la hauteur du flotteur 4 étant déterminée par le niveau d'eau dans l'espace intérieur et contrôlant la position de l'obturateur 3. L'obturateur 3 peut être relié au flotteur 4 par un lien filaire 5 traversant la conduite 1. Il est ainsi possible de dégager ou d'obturer la conduite 1, par exemple l'extrémité d'entrée 14, en fonction de la hauteur du flotteur 4. Le lien filaire 5 peut par exemple traverser l'extrémité d'entrée 14 de la conduite 1 en formant un angle.

La longueur du lien filaire 5, la taille et/ou la forme du flotteur 4 contrôlent la manière dont l'obturateur 3 se déplace dans la conduite 1, et par suite le volume mort lors de l'écoulement d'eau dans la conduite 1 et le débit résultant. La forme du flotteur 4 peut être choisie de manière à minimiser le volume mort en fin de course, en particulier lorsque le flotteur est placé dans une enceinte close telle qu'un boîtier. Le flotteur 4 peut être de forme sphérique, cylindrique, de sphère tronquée adaptée pour être placée vers le haut ou vers le bas en position de fonctionnement dans un réservoir, voire de disque. Ainsi la forme de la conduite 1, la forme de l'obturateur 3 et son lien filaire 5 avec le flotteur 4 permettent de maîtriser le débit d'eau par le premier passage d'évacuation 2. En particulier, il est ainsi possible de réguler le débit en fonction de la hauteur du flotteur 4, qui elle-même est fonction du niveau d'eau dans l'espace intérieur.

Le dispositif peut comprendre en outre un guide 9 le long duquel le flotteur 4 se déplace. Le guide 9 peut être une colonne poreuse présentant un diamètre intérieur légèrement supérieur aux dimensions du flotteur 4. En variante le guide 9 peut être un ensemble de tiges, par exemple de tiges parallèles, les tiges limitant le déplacement du flotteur 4 en définissant la zone dans laquelle le flotteur 4 se déplace en fonction du niveau d'eau.

### 1.4. Passage d'évacuation de trop-plein

La conduite 1 peut présenter un deuxième passage d'évacuation 8 de trop-plein, apte à assurer une communication fluidique entre l'espace intérieur et la conduite, et débouchant en aval de ladite extrémité d'entrée 14 de la conduite 1, de telle sorte que l'eau présente dans l'espace intérieur peut s'écouler par le deuxième passage 8 vers le premier passage 2 lorsque l'obturateur 3 bloque l'écoulement de l'eau à travers ladite extrémité. Le deuxième passage d'évacuation 8 peut par exemple comprendre un orifice dont le diamètre est par exemple supérieur ou égal à 1cm, débouchant entre la section intérieure 12 de la conduite 1 et l'extérieur de la conduite 1. Ainsi, lorsque le niveau d'eau dépasse le premier niveau, le flotteur 4 est à une hauteur telle que par le biais du lien filaire 5, l'obturateur 3 vient bloquer l'écoulement par l'extrémité d'entrée 14, et l'écoulement maximal de l'eau depuis l'espace intérieur vers le premier passage d'évacuation 2 est permis par le deuxième passage d'évacuation 8 de trop-plein sans rencontrer l'obturateur 3, qui est alors en amont le long de la conduite 1.

L'écoulement régulé et l'écoulement du trop-plein sont ainsi évacués par le même passage d'évacuation 2. Cette variante est avantageuse en ce qu'elle permet d'évacuer les particules issues de complexes de végétation associés au bac de rétention temporaire d'eau en toiture de bâtiment. Cette variante s'avère également avantageuse en ce qu'elle évite d'avoir à créer en hauteur du bac et/ou du dispositif un orifice de trop-plein, dont la position varierait en fonction de la surcharge admissible.

*1.5. Boîtier*

La conduite 1 et l'obturateur 3 peuvent être logés dans un boîtier 6. Le boîtier 6 délimite un espace intermédiaire 110 permettant une communication fluidique entre l'espace intérieur 210, par exemple défini par le réservoir ou le bac auquel est connecté le dispositif, et la conduite 1. Un troisième passage 7 peut relier l'espace intérieur 210 et l'espace intermédiaire 110. Le déplacement de l'obturateur peut alors être régulé par le niveau d'eau dans l'espace intermédiaire 110, lui-même fonction du niveau d'eau dans l'espace intérieur 210. Le boîtier 6 permet ainsi de former un volume d'eau temporaire dans l'espace intermédiaire 110, avant l'écoulement par le premier passage d'évacuation 2, et d'obtenir une régulation plus précise du débit de fuite.

Les éléments du dispositif, tels que la conduite 1, l'obturateur 3, le flotteur 4 et le lien filaire 5 peuvent être disposés dans le boîtier 6.

Le troisième passage 7 peut être disposé au niveau d'un côté latéral du boîtier 6, ou de plusieurs côtés latéraux du boîtier 6, par exemple deux côtés latéraux opposés.

Un ou plusieurs filtres peuvent être positionnés pour préfiltrer l'eau entrant dans l'espace intermédiaire 110 et éviter ainsi les risques de colmatage.

Par exemple, les filtres peuvent être positionnés au niveau du ou des troisièmes passages 7.

Le boîtier 6 peut être réalisé en plastique étanche. Le boîtier 6 est par exemple une coque.

Le fait que le dispositif présente des filtres, en particulier que le dispositif se présente dans un boîtier 6 fermé muni de filtres, diminue par ailleurs les risques de colmatage et assure une fonction supplémentaire de filtrage des eaux collectées, par exemple des eaux pluviales, sur leur lieu de collecte, ce qui permet une diminution de leur turbidité à la source, et une diminution des teneurs en polluants filtrables, voire une élimination de certains polluants filtrables.

*1.6. Premier passage d'évacuation*

Le premier passage d'évacuation 2, tel qu'illustré aux figures 1a et 1b, peut comprendre un orifice du boîtier 6. Le premier passage d'évacuation 2 peut également comprendre un orifice ou un passage d'évacuation du bac disposé en aval de l'orifice du boîtier 6. Le dispositif peut être adapté pour être connecté à un passage d'évacuation du bac situé au niveau d'une paroi latérale ou d'un fond du bac.

En référence à la figure 3, le premier passage d'évacuation 2 peut comprendre un tube s'étendant à partir du boîtier 6, faisant partie du boîtier 6, ou formant un élément distinct du boîtier 6, et connectant la conduite 6 avec l'extérieur du boîtier 6. Le tube du premier passage d'évacuation 2 peut par exemple s'étendre suffisamment à partir du boîtier 6 pour pouvoir traverser un orifice du bac dans lequel il doit être agencé, pour déboucher à l'extérieur du bac.

2. Réservoir et système de rétention d'eau

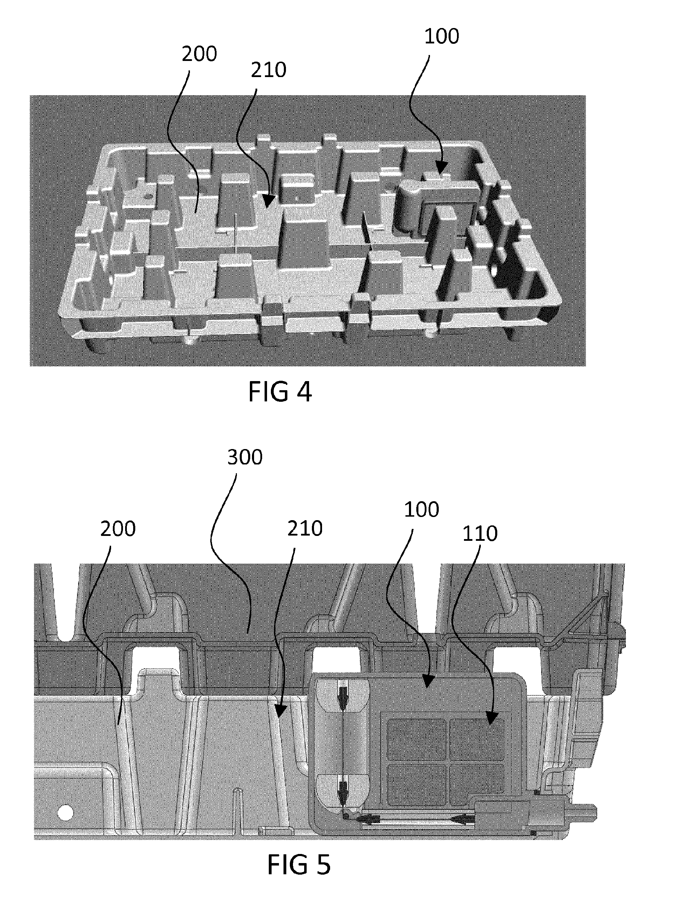

En référence aux figures 4 et 5, il est décrit un système de rétention d'eau comprenant un dispositif 100 d'évacuation tel que décrit précédemment. Le système de rétention peut comprendre un bac de végétalisation. Le bac de végétalisation est par exemple conformé pour venir s'encastrer dans un bac de rétention temporaire d'eau. Alternativement le bac de végétalisation est par exemple venu de matière avec un bac de rétention temporaire d'eau. Le bac de rétention temporaire d'eau peut comprendre le dispositif 100 d'évacuation d'eau.

En référence aux figures 4 et 5, il est décrit un réservoir de rétention temporaire d'eau comprenant un dispositif 100 d'évacuation d'eau tel que décrit précédemment.

Le dispositif 100 peut être arrimé au fond du réservoir par différents systèmes de clips, par un réceptacle moulé en fond du réservoir, ou par un guide, par exemple un orifice dans lequel une partie du dispositif 100 vient s'emboîter. Il peut s'agir par exemple d'un orifice du réservoir dans lequel vient s'insérer un tube du dispositif 100 formant premier passage d'évacuation 2.

En référence à la figure 4, le dispositif d'évacuation est par exemple positionné au fond d'un réservoir. Le réservoir est par exemple un sous-bac 200 de stockage temporaire des eaux pluviales, par exemple tel que décrit dans WO 2010/086369 A1. Un tel dispositif est ainsi placé pour 4 à 8 sous-bacs de stockage qui communiquent entre eux. Les sous-bacs 200 peuvent par exemple être positionnés côte à côte, le dispositif 100 étant positionné dans le sous-bac 200 situé en lisière de l'ensemble de sous-bacs, dans une position correspondant au point bas de la pente de l'ensemble, s'il y a une pente et de telle sorte que la conduite 1 soit orthogonale à la pente.

Ainsi le sous-bac 200 peut être de forme sensiblement rectangulaire.

Les dimensions du fond peuvent être faibles vis-à-vis des dimensions d'une toiture sur laquelle le sous-bac 200 est destiné à être positionné. Plus particulièrement, l'intérêt de bacs de petites dimensions est de pouvoir répartir la masse d'eau de façon homogène sur la surface de l'ensemble de la toiture. En effet, tous les bacs porteront systématiquement et automatiquement la même masse, en bas de pente comme en haut de pente.

La superficie du fond plein est par exemple inférieure à 2 m$^2$, de préférence inférieure à 1 m$^2$. A titre d'exemple, le fond est rectangulaire et mesure 60 centimètres de longueur et 40 centimètres de largeur.

En variante, le sous-bac 200 peut comprendre un orifice de trop-plein (non représenté) pour évacuer l'eau en surplus, distinct du premier passage d'évacuation, disposé sur une paroi latérale du sous-bac 200, en hauteur par rapport au dispositif 100.

Le sous-bac 200 est de préférence réalisé en matière inerte et inaltérable, en plastique par exemple.

En référence à la figure 5, le dispositif 100 et le sous-bac 200 peuvent être surmontés d'un bac de végétalisation 300, par exemple un bac précultivé, tel que décrit dans WO 2010/086369 A1 ou tel que l'hydropack™ décrit dans EP 1044599 B1 ou tout autre système, tel que des plaques ou un revêtement, permettant d'y superposer d'autres formes de toiture, par exemple du gravier, ou de végétalisation, par exemple des tapis ou des systèmes de végétalisation intensive.

L'orifice du sous-bac 200 correspondant au premier passage d'évacuation 2 pour l'eau qui s'est écoulé via le dispositif 100 peut être positionné à une certaine distance du fond du sous-bac 200, à travers une paroi latérale. En variante, on peut également prévoir une ou plusieurs cloisons (non représentées) partant du fond du sous-bac 200 et s'étendant sur une hauteur inférieure à celle de la paroi latérale, la ou les cloisons divisant le sous-bac 200 en une ou plusieurs régions dont l'une au moins n'est pas reliée à des moyens d'évacuation d'eau et peut ainsi former une réserve d'eau. L'eau stagnante est alors disponible pour des plantes d'un complexe de végétation du bac de végétalisation 300. Des mèches synthétiques accrochées au fond du bac de végétalisation 300 ou du sous bac 200 et traversant un support de végétation par des orifices de drainage, peuvent être reliées à une membrane hydrophile permettant l'échange hydrique avec le substrat des plantes et le complexe de végétalisation situé au-dessus par capillarité.

Outre la maîtrise du débit de fuite, le sous-bac 200 et le bac de végétalisation 300 associé peuvent effectivement également permettre la gestion de l'infiltration en prévoyant l'utilisation d'un complexe de végétation. Une partie des eaux pluviales peut ainsi être absorbée par le complexe de végétation puis renvoyée dans l'atmosphère par évapotranspiration, ce qui permet de nettement réduire l'infiltration.

Les eaux pluviales qui ne sont pas absorbées par le complexe de végétation descendent quant à elles dans le sous-bac 200 où le débit de fuite de cet excédent d'eau sera régulé par le dispositif.

Un système de rétention d'eau peut comprendre le sous-bac 200 présentant le dispositif 100 et le bac de végétalisation 300, ces derniers étant conformés pour venir s'encastrer l'un dans l'autre.

Selon une variante (non représentée), le système de rétention d'eau peut comprendre un bac à double fond en une seule pièce formant le sous-bac 200 présentant le dispositif 100 et le bac de végétalisation 300. Le sous-bac 200 peut alors être venu de matière avec le bac de végétalisation 300.

Les exemples de mode de réalisation décrits sont destinés à couvrir des variantes, des modifications et des équivalents, qui sont inclus dans l'esprit et l'étendue de l'invention telle que définie par les revendications jointes. En outre, dans la description détaillée des exemples de mode de réalisation, de nombreux détails spécifiques sont exposés afin de fournir une compréhension détaillée de l'invention revendiquée. Cependant, un homme du métier comprendra que divers modes de réalisation peuvent être mis en pratique sans ces détails spécifiques.

Bien que les caractéristiques et les éléments des présents exemples de mode de réalisation soient décrits dans les modes de réalisation en des combinaisons particulières, chaque caractéristique ou élément peut être utilisé seul sans les autres caractéristiques et éléments des modes de réalisation ou en diverses combinaisons avec ou sans d'autres caractéristiques et éléments présentés ici.

Cette description écrite utilise des exemples de l'objet présenté pour permettre à n'importe quel homme du métier de mettre en pratique la susdite, y compris en réalisant et en utilisant n'importe quels dispositifs ou systèmes et en appliquant n'importe quels procédés incorporés. L'étendue brevetable de l'objet est définie par les revendications, et peut comprendre d'autres exemples qui apparaîtront aux hommes du métier. Ces autres exemples sont destinés à être dans l'étendue des revendications.

## Revendications

1. Dispositif d'évacuation d'eau d'un espace intérieur d'un réservoir de rétention temporaire d'eau par un premier passage d'évacuation (2), **caractérisé en ce qu'**il comprend :

   - une conduite (1) agencée pour assurer une communication fluidique entre l'espace intérieur et le premier passage d'évacuation (2), la conduite (1) présentant une section intérieure (12) dont la surface va en croissant dans le sens d'écoulement de l'eau dans la conduite vers le premier passage d'évacuation (2) et
   - un obturateur (3) disposé à l'intérieur de la conduite (1), et contrôlé de manière à être déplacé à l'intérieur de la conduite (1) en fonction du niveau d'eau dans l'espace intérieur, le déplacement de l'obturateur (3) dans la conduite (1) permettant de réguler le débit de fuite à travers le premier passage d'évacuation (2) quel que soit le niveau d'eau dans l'espace intérieur entre un premier niveau et un deuxième niveau d'eau.

**2.** Dispositif selon la revendication 1, dans lequel la section intérieure (12) de la conduite (1) est de forme conique.

**3.** Dispositif selon l'une des revendications 1 ou 2, dans lequel l'obturateur (3) est relié à un flotteur (4), la hauteur du flotteur (4) étant déterminée par le niveau d'eau dans l'espace intérieur et contrôlant la position de l'obturateur (3).

**4.** Dispositif selon la revendication 3, dans lequel l'obturateur (3) est relié au flotteur (4) par un lien filaire (5) traversant la conduite (1).

**5.** Dispositif selon l'une des revendications 3 ou 4, comprenant en outre un guide (9) le long duquel le flotteur (4) se déplace.

**6.** Dispositif selon l'une des revendications 1 à 5, dans lequel l'obturateur (3) présente une forme complémentaire d'une extrémité ouverte de la conduite (1) à l'opposé du premier passage d'évacuation (2), de sorte à bloquer l'écoulement de l'eau à travers ladite extrémité lorsque le niveau d'eau dans l'espace intérieur dépasse le premier niveau.

**7.** Dispositif selon la revendication 6, dans lequel la conduite présente un deuxième passage d'évacuation de trop-plein (8) apte à assurer une communication fluidique entre l'espace intérieur et la conduite, débouchant en aval de ladite extrémité de la conduite (1) de telle sorte que l'eau présente dans l'espace intérieur peut s'écouler par le deuxième passage (8) vers le premier passage (2) lorsque l'obturateur (3) bloque l'écoulement de l'eau à travers ladite extrémité.

**8.** Dispositif selon l'une des revendications 1 à 7, dans lequel le débit de fuite régulé est un débit constant quel que soit le niveau d'eau dans l'espace intérieur entre le premier niveau et le deuxième niveau d'eau.

**9.** Dispositif selon l'une des revendications 1 à 8, dans lequel la conduite (1) et l'obturateur (3) sont logés dans un boîtier (6) délimitant un espace intermédiaire (110) et présentant un troisième passage (7) reliant l'espace intérieur (210) et l'espace intermédiaire (110).

**10.** Dispositif selon l'une des revendications 1 à 9, dans lequel le troisième passage (7) est muni d'un filtre.

**11.** Réservoir de rétention temporaire d'eau comprenant un dispositif d'évacuation d'eau selon l'une des revendications 1 à 10.

**12.** Système de rétention d'eau, comprenant un bac de végétalisation et un bac de rétention temporaire d'eau, le bac de végétalisation étant :

- conformé pour venir s'encastrer dans un bac de rétention temporaire d'eau, ou
- venu de matière avec un bac de rétention temporaire d'eau,

le bac de rétention temporaire d'eau comprenant un dispositif d'évacuation d'eau selon l'une des revendications 1 à 10.

FIG 1a

100

FIG 1b

5    3

FIG 2

100    110    110

FIG 3

FIG 4

FIG 5

Europäisches
Patentamt

European
Patent Office

Office européen
des brevets

**RAPPORT DE RECHERCHE EUROPEENNE**

Numéro de la demande

EP 13 19 4280

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 1 366 857 A (CLIMENT, MARIE) 17 juillet 1964 (1964-07-17) * figures 1,2,4 * | 1,2,8 | INV. E04D11/00 E04D13/04 A01G1/00 A01G27/02 |
| X | DE 10 46 352 B (THUERINGISCHES KUNSTFASERWERK) 11 décembre 1958 (1958-12-11) * figure 1 * | 1-3,6 | |
| X | WO 2009/044927 A1 (OSHIO KOZO [JP]) 9 avril 2009 (2009-04-09) * figures 3,4 * | 1-4,6,8, 11,12 | |
| X | DE 10 2007 055451 A1 (GOERKE MANUEL [DE]; GOERKE ULLA [DE]) 28 mai 2009 (2009-05-28) * figure 3 * | 1-5,8-11 | |
| A,D | WO 2010/086369 A1 (SARL LE PRIEURE [FR]; LAME RAPHAEL [FR]; REDJALA-OUNNAS TANEGMART [FR]) 5 août 2010 (2010-08-05) * figures 2,6a,6b * | 1-12 | |
| A | KR 2009 0129724 A (HANSU GREENTECH CO LTD [KR]) 17 décembre 2009 (2009-12-17) * figure 3 * | 12 | DOMAINES TECHNIQUES RECHERCHES (IPC) E04D E03B E03F E02B G05D A01G |
| A | EP 2 141 292 A2 (GOERKE ULLA [DE]; GOERKE MANUEL [DE]) 6 janvier 2010 (2010-01-06) * le document en entier * | 1-12 | |

Le présent rapport a été établi pour toutes les revendications

| Lieu de la recherche | Date d'achèvement de la recherche | Examinateur |
|---|---|---|
| La Haye | 17 décembre 2013 | Leroux, Corentine |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 19 4280

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-12-2013

| Document brevet cité au rapport de recherche | Date de publication | Membre(s) de la famille de brevet(s) | Date de publication |
|---|---|---|---|
| FR 1366857 A | 17-07-1964 | AUCUN | |
| DE 1046352 B | 11-12-1958 | AUCUN | |
| WO 2009044927 A1 | 09-04-2009 | AUCUN | |
| DE 102007055451 A1 | 28-05-2009 | AUCUN | |
| WO 2010086369 A1 | 05-08-2010 | CA 2751048 A1<br>EP 2394002 A1<br>FR 2941477 A1<br>US 2011290341 A1<br>WO 2010086369 A1 | 05-08-2010<br>14-12-2011<br>30-07-2010<br>01-12-2011<br>05-08-2010 |
| KR 20090129724 A | 17-12-2009 | AUCUN | |
| EP 2141292 A2 | 06-01-2010 | DE 102008030280 A1<br>EP 2141292 A2 | 31-12-2009<br>06-01-2010 |

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1044599 B1

- WO 2010086369 A1